# EUROPEAN PATENT APPLICATION

(11) **EP 1 746 838 A1**
(43) Date of publication of application: **24.01.2007**
(21) Application number: 05015562.1
(22) Date of filing: 18.07.2005
(51) Int. Cl.: H04N 7/26

(54) **Moving picture coding apparatus and moving picture decoding apparatus**

(71) Applicant: MATSUSHITA ELECTRIC INDUSTRIAL CO., LTD., Kadoma-shi, Osaka 571-8501 (JP)
(72) Inventor: Kondo, Satoshi, Kyoto 614-8361 (JP); Toma, Tadamasa, Osaka 560-0085 (JP); Saito, Hiroshi, Osaka 591-8025 (JP); Wedi, Thomas, 64823 Gross-Umstadt (DE)
(74) Representative: Grünecker, Kinkeldey, Stockmair & Schwanhäusser Anwaltssozietät

(57) **Abstract**

In a moving picture coding apparatus according to the present invention, a signal separation unit 101 separates an input picture made up of component pictures of RGB, each of which has an equal number of pixels as the input picture, into three component pictures, and outputs the three component pictures. Each of coding units 102, 103 and 104 codes one of the component pictures into an intra-picture prediction coded picture or an inter-picture prediction coded picture, and outputs a bit stream corresponding to the component picture. A bit stream multiplexing unit 105 multiplexes three bit streams outputted from the three coding units into one bit stream, and outputs the bit stream. Each of the coding units 102, 103 and 104 determines a respective prediction method for the component picture at the time of coding.

## Description

### Technical Field

The present invention relates to a moving picture coding apparatus, a moving picture decoding apparatus and a code sequence, in the case of coding or decoding a picture made up of component pictures as many as N (N is an integer that is two or greater), each of the component pictures having equal number of pixels.

### Background Art

In a Moving Picture Experts Group 4 (MPEG-4) Advanced Video Coding (AVC) standard (Draft of Version 4 of H. 264/AVC, ITU-T Recommendation H. 264 and ISO/IEC 14496-10(MPEG-4 Part 10) Advanced Video Coding, JVT-N050d1, January 28, 2005.) established by the MPEG under the ISO/IEC, a method of coding a moving picture of RGB format is provided. Here, a conventional method of coding and decoding RGB data by mapping the RGB data to YUV data (where G signal is mapped to Y signal, B signal is mapped to U signal, and R signal is mapped to V signal) is provided.

However, in the conventional method, the RGB signals are coded and decoded using the same method as the conventional method of coding and decoding YUV data. In the conventional coding of YUV data, same intra prediction mode is used for U data and V data, whereas an intra prediction mode used for Y data is different from an intra prediction mode used for U data and V data. Therefore, in the case of mapping the YUV data to the RGB data, while same intra prediction mode is used for R data and B data, an intra prediction mode used for G data is different from the intra prediction mode used for R data and B data. Also, in the conventional coding of the YUV data, a motion vector of Y data is used for motion compensation of the U data and the V data. Therefore, in the case of mapping the YUV data to the RGB data, a motion vector of G data is used for motion compensation of the R data and the B data. In this case, if a picture of RGB 4 : 4 : 4 format is coded and decoded by independently coding and decoding R data, G data and B data in parallel, information (intra process method and motion vector) passing is required for coding and decoding of each data. Accordingly, there is a problem of causing complexity of structures of the coding apparatus and decoding apparatus.

### Disclosure of Invention

The present invention aims to solve the conventional problem and its object is to provide a moving picture coding apparatus, moving picture decoding apparatus and code sequence which can code and decode a picture in a simple structure in the case where R data, G data and B data of a picture of RGB 4 : 4 : 4 format are independently coded and decoded in parallel.

In order to solve the problem, the first invention is a moving picture coding apparatus comprising: a signal separation unit operable to separate an input picture made up of N component pictures, where N is an integer that is 2 or greater, into the N component pictures, each of the N component pictures having an equal number of pixels as the input picture; N coding units, each of which is operable to code one of the N component pictures into an intra-picture prediction coded picture or an inter-picture prediction coded picture, and to output a code sequence corresponding to the component picture; and a bit stream multiplexing unit operable to multiplexes the N code sequences outputted from said N coding units into one bit stream, and to output the bit stream.

The second invention is a moving picture decoding apparatus, comprising: a variable length decoding unit operable to perform variable-length decoding of an input bit stream generated by coding an original picture made up of N component pictures, where N is an integer that is 2 or greater, and to separate the bit stream into N code sequences corresponding to the N component pictures, each of the N component pictures having an equal number of pixels as the original picture; N decoding units, each of which is operable to decode one of the N code sequences into an intra-picture prediction coded picture, and to output a decoded picture corresponding to one of the N component pictures; and a signal multiplexing unit operable to multiplex the N decoded pictures outputted by said N decoding units into a decoded picture, and to output the decoded picture.

The third Invention is a code sequence having a data structure as a bit stream to be decoded by a computer, wherein the code sequence represents one bit stream made up of N code sequences, where N is an integer that is 2 or greater, the N code sequences respectively correspond to N component pictures separated from an original picture, each of the N component pictures has an equal number of pixels as the original picture, and each of the N code sequences is coded by one of an intra-picture prediction coding and an inter-picture prediction coding.

Accordingly, the use of the moving picture coding apparatus, moving picture decoding apparatus and code sequence of the present invention allows coding and decoding each of the N component pictures Independently so that the structures of the coding apparatus and decoding apparatus can be simplified. Therefore, the practical value of the present invention is high.

### Brief Description of Drawings

These and other objects, advantages and features of the invention will become apparent from the following description thereof taken in conjunction with the accompanying drawings that illustrate a specific embodiment of the invention. In the Drawings:
FIG. 1 is a block diagram showing an example of a structure of a moving picture coding apparatus of the present invention;
FIG. 2 is a block diagram showing an example of a structure of a coding unit in the moving picture coding apparatus of the present invention;
FIG. 3 is a schematic diagram showing a format of a picture signal handled in the moving picture coding apparatus of the present invention;
FIG. 4 is a block diagram for illustrating an intra prediction mode used in the moving picture coding apparatus of the present invention;
FIGS. 5A-5E are schematic diagrams showing moving picture coding formats of the present invention;
FIG. 6 is a block diagram showing an example of a structure of the coding unit in the moving picture coding apparatus of the present invention;
FIG. 7 is a block diagram showing an example of a structure of the moving picture coding apparatus of the present invention;
FIG. 8 is a block diagram showing an example of a structure of the coding unit in the moving picture coding apparatus of the present invention;
FIG. 9 is a block diagram showing an example of a structure of the coding unit of the moving picture coding apparatus of the present invention;
FIG. 10 is a block diagram showing an example of a structure of a moving picture decoding apparatus of the present invention;
FIG. 11 is a block diagram showing an example of a structure of a decoding unit in the moving picture decoding apparatus of the present invention; and
FIG. 12 is a block diagram showing an example of a structure of the decoding unit in the moving picture decoding apparatus of the present invention.

### Best Mode for Carrying Out the Invention

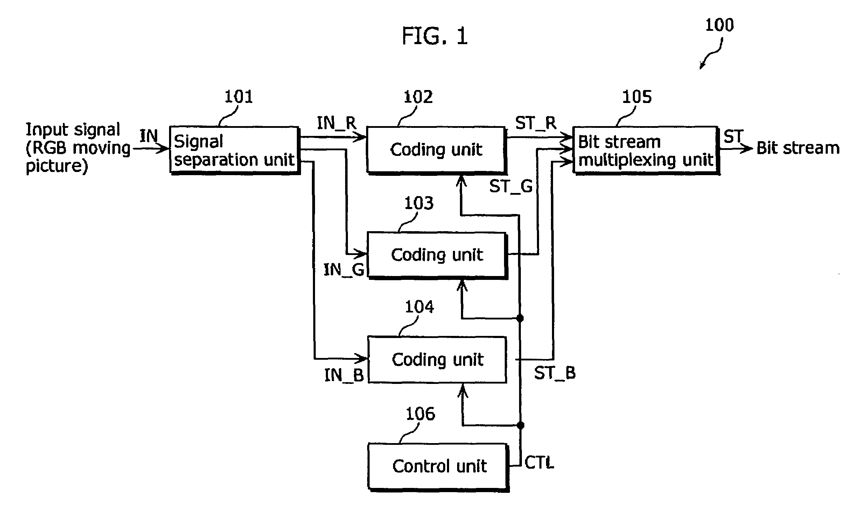

Hereafter, embodiments of the present invention are described with references to FIG. 1 to FIG. 12.

### (First Embodiment)

FIG. 1 is a block diagram showing an example of a structure of a moving picture coding apparatus according to the present invention. A moving picture coding apparatus 100 is made up of a signal separation unit 101, three coding units 102, 103 and 104, a bit stream multiplexing unit 105 and a control unit 106.

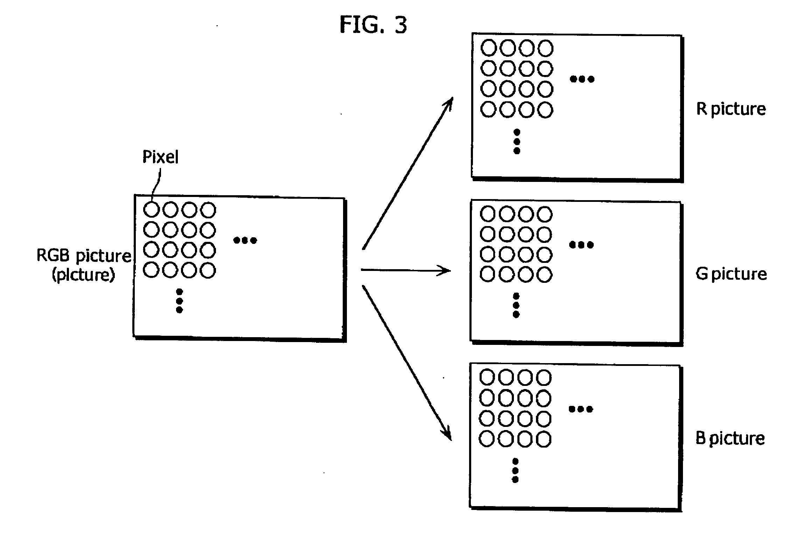

An input signal IN is inputted to the signal separating unit 101. The input signal IN is a moving picture signal of RGB 4 : 4 : 4 format. Here, as shown in FIG. 3, the RGB 4 : 4 : 4 format is a format in which each pixel is described as a combination of three pixels of R signal, G signal and B signal, and in which each of the R signal, G signal and B signal as a respective picture has equal number of pixels. For example, in the case where each color pixel of the R signal, G signal and B signal is indicated by 8 bits, one pixel of the RGB signal is indicated by 24 bits.

The input RGB signal IN inputted to the signal separation unit 101 is separated into three signals: an input signal (input picture) IN_R including only R signals; an input signal (input picture) IN_G including only G signal; and an input signal (input picture) IN_B including only B signal. The separated three signals are respectively inputted to the coding units 102, 103 and 104.

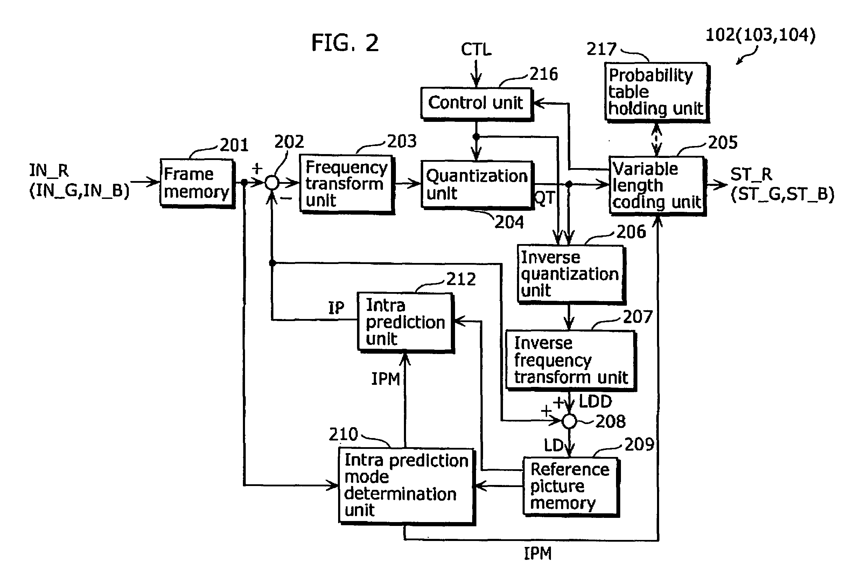

FIG. 2 shows a structure of each of the coding units 102, 103 and 104. Hereafter, it is explained about the operation of the coding unit 102 which codes the input signal IN_R. However, the structure and the operation are common to the coding unit 103 which codes the input signal IN_G and the coding unit 104 which codes the input signal IN_B.

As shown in FIG. 2, the coding unit 102 is made up of a frame memory 201, a subtracting unit 202, a frequency transform unit 203, a quantization unit 204, a variable length coding unit 205, an inverse quantization unit 206, an Inverse frequency transform unit 207, an adding unit 208, a reference picture memory 209, an intra prediction mode determination unit 210, an intra prediction unit 212, a control unit 216 and a probability table holding unit 217.

The coding unit 102 codes each picture of the input pictures IN_Rs as an intra-picture prediction coded (Intra) picture.

The input picture IN_R is stored in the frame memory 201 and then outputted from the frame memory 201 on a block-by-block basis (e.g. in a unit of macro block having horizontal 16 pixels and vertical 16 pixels).

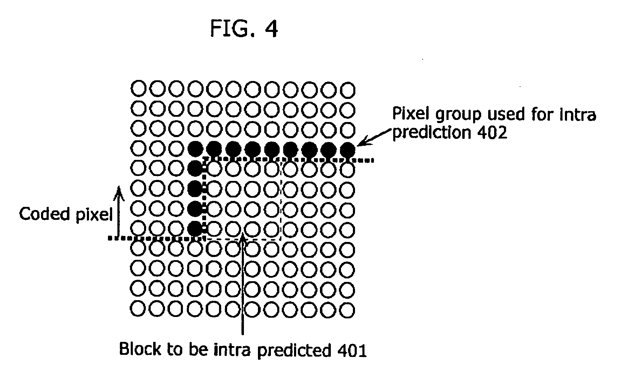

The macro block outputted from the frame memory 201 is inputted to the intra prediction mode determination unit 210. The intra prediction mode determination unit 210 determines how to perform intra prediction on the inputted macro block. As an intra prediction mode (IPM), it is necessary to determine an intra prediction block size (one of the following sizes: horizontal 4 pixels × vertical 4 pixels; horizontal 8 pixels × vertical 8 pixels; and horizontal 16 pixels × vertical 16 pixels), and an intra prediction direction (e.g. an intra prediction current block 401 is predicted in nine different intra prediction directions using pixel group 402 shown as black circles in FIG. 4 in the case where the intra prediction block size is a unit of horizontal 4 pixels × vertical 4 pixels). Here, it is assumed that peripheral pixels (pixels shown as black circles in FIG. 4) to be used for the intra prediction have already coded and stored in the reference picture memory 209. The information indicating the IPM determined intra prediction mode IPM is outputted to the intra prediction unit 212 and the variable length coding unit 205.

The intra prediction unit 212, based on the intra prediction mode IPM determined by the intra prediction mode determination unit 210, obtains intra reference pixels from the reference picture memory 209, generates an intra predictive image IP, and outputs the intra predictive image IP to the subtracting unit 202.

The subtracting unit 202 receives the macro block of the input picture from the frame memory 201 and the intra predictive image IP generated by the intra prediction unit 212, generates a differential image between the macro block and the intra predictive image IP, and outputs the differential image to the frequency transform unit 203.

The frequency transform unit 203 performs frequency transformation on the differential image generated by the prediction unit 212, and outputs.frequency transform coefficients.

The quantization unit 204 performs quantization of the frequency transform coefficients generated by the frequency transform unit 203, and outputs the quantized frequency transform coefficients QT. Here, the quantization is a process of dividing the frequency transform coefficients by a predetermined value (quantization step). It is assumed that this quantization step is given by the control unit 216 (the quantization step may be included in a control signal CTL from the control unit 106). The quantized frequency transform coefficients QT are outputted to the variable length coding unit 205 and the inverse quantization unit 206.

The quantized frequency transform coefficients QT are processed inverse quantization by the inverse quantization unit 206, are further processed inverse frequency transformation by the inverse frequency transform unit 207, and become a decoded differential image LDD. The decoded differential image LDD is added to the intra predictive image IP in the adding unit 208, becomes a decoded image LD, and stored in the reference picture memory 209. The decoded image LD stored in the reference picture memory 209 is used in a later coding as a reference picture.

The variable length coding unit 205 performs variable length coding on the quantized frequency transform coefficients QT inputted from the quantization unit 204, information indicating an intra prediction mode IPM inputted from the intra prediction mode determination unit 210 and the like, and outputs a bit stream ST_R, which is also referred to as a code sequence.

Here, as a method of the variable length coding method used in the variable length coding unit 205, there is a context adaptive arithmetic coding method adopted in the international standard moving picture coding method H. 264. The context adaptive arithmetic coding method is a method of switching the probability tables used for arithmetic coding according to the variable length coding target data and data on which the variable length coding has already been performed (context adaptation). For example, as a context for performing variable length coding of the quantized frequency transform coefficients QT, a block size for intra prediction and a block size for frequency transformation and the like are used. Here, it is assumed that the probability tables are held in the probability table holding unit 217.

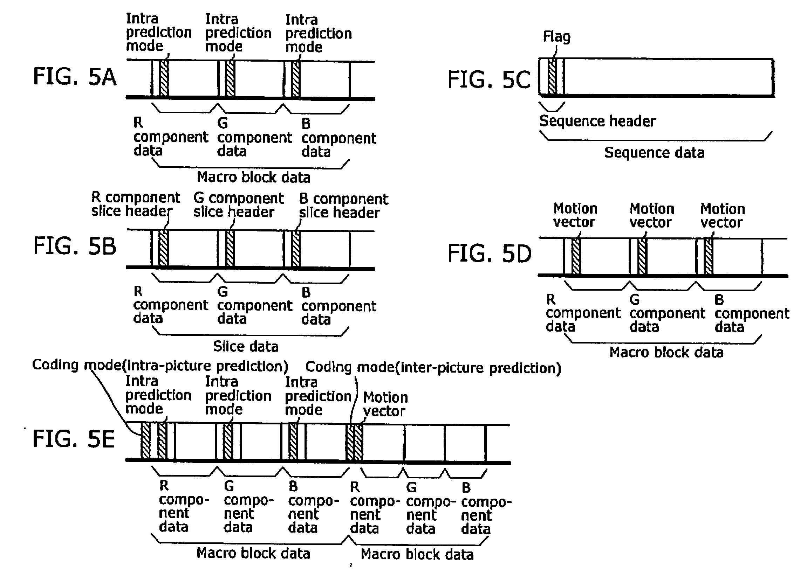

The coding units 102, 103 and 104 respectively output the bit streams ST_R, ST_G and ST_B and input them to the bit stream multiplexing unit 105. The bit stream multiplexing unit 105 multiplexes the inputted three bit streams ST_R, ST_G and ST_B into one bit stream ST, and outputs the ST. Here, as a method of multiplexing three bit streams into one bit stream, there are a multiplexing method in a unit of block or macro block, a multiplexing method in a unit of picture or slice, and the like. Here, the multiplexing method in a unit of block or macro block has an effect of having an almost same bit stream structure as the bit stream structure of the conventional bit stream obtained by coding the YUV pictures. FIG. 5A shows an example of a structure of the bit stream for this case. Also, in the case of multiplexing in a unit of picture or slice, a unit for multiplexing becomes larger so that switching process of bit streams for multiplexing is reduced. Thus, there is an effect that the multiplexing process can be simplified. FIG. 5B shows an example of a structure of the bit stream for this case. Further, information (flag) indicating that each signal of RGB is independently coded (indicating that the intra prediction mode is independently determined, or describing the intra prediction mode for each signal respectively in the bit stream) may be described in the bit stream. The information (flag) may be described in a header of the whole sequence or in an additional information unit. FIG. 5C shows an example of a structure of the bit stream for this case. Accordingly, in the case where the decoding apparatus decodes the bit stream, it can be judged easily about whether the RGB signals can be decoded independently.

As described in the above, the moving picture coding apparatus of the present invention separates an input moving picture of RGB 4 : 4 : 4 format into R signal, G signal and B signal, and perform intra prediction coding of each signal using respective coding unit for each signal. Herein, in the intra prediction at the time of coding each signal, an intra prediction mode is determined respectively for each signal. Further, at variable length coding using arithmetic coding in the case of coding each signal, a probability table is held respectively by each signal (a probability table is not commonly used among signals).

Through such operations, coding can be performed completely independently for each signal (coding units do not need to transfer data, information and the like mutually each other) so that the structure of the coding apparatus can be simplified without reducing the coding efficiency. For example, in the case where it is difficult to process for single coding apparatus a very large number of pixels of an input signal (e.g. in the case where the input picture has pixels equal to or more than the pixels in the HDTV picture), the present invention is very useful. Also, in this case, each of the RGB signal has the same number of pixels so that the respective coding unit of each signal can have the same hardware structure. Furthermore, in the case where the intra prediction mode is determined respectively for each signal, information indicating the intra prediction mode is respectively described in each signal as a bit stream structure. Accordingly, the RGB signals can be decoded respectively also in the case of decoding the bit stream so that there is an effect that the decoding process is simplified.

It should be noted that, while in the present embodiment, the input picture of RGB 4 : 4 : 4 format, that is a picture having three color elements, is handled, coding process can be performed in the same structure for the number of color elements even in the case the color elements include other than the three colors (e.g. four colors, six colors and the like). Therefore, the same effect as obtained in the present embodiment can be obtained.

### (First Variation)

The first embodiment can be modified as follows.

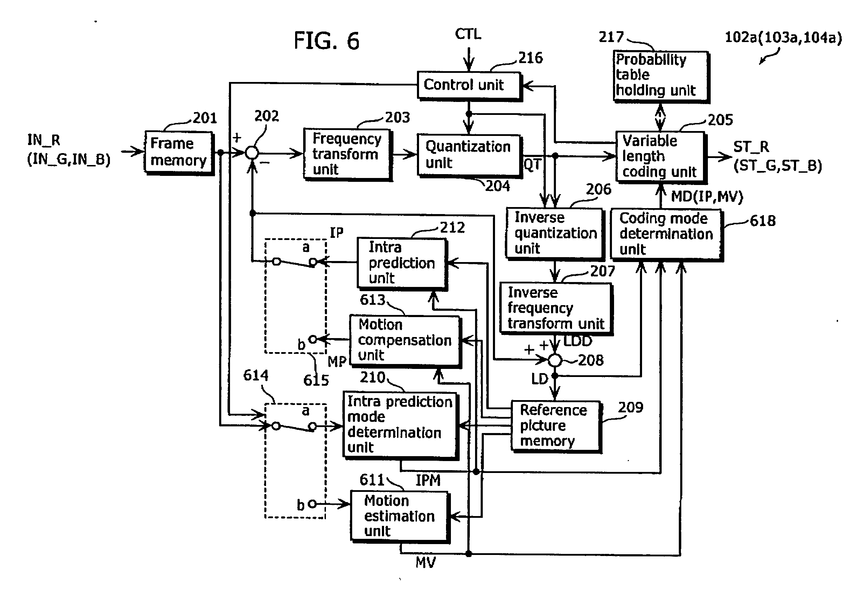

FIG. 6 is a diagram showing an example of a different configuration of the coding unit 102 (or one of coding units 103 and 104) (here, for the purpose of distinction, they are referred to as the coding units 102a, 103a and 104a). The coding unit 102a has a motion estimation unit 611, a motion compensation unit 613, switches 614 and 615, and coding mode determination unit 618, in addition to the constituents of the coding unit 102 shown in FIG. 2.

Whereas the coding unit 102 codes each picture of the input pictures IN_Rs as an intra-picture prediction coded (intra) picture, the coding unit 102a differs from the coding unit 102 in that it can also code a picture of the input pictures IN_Rs as an inter-picture prediction coded (inter) picture.

A processing method used in the coding unit 102a in the case of coding each picture of the input pictures IN_R as an inter-picture prediction coded picture is same as the processing method described in first embodiment. Therefore, the explanation is omitted in here.

It is explained about an operation in the case of coding a picture of the input pictures IN_Rs as an inter-picture prediction coded picture.

The input pictures IN_Rs are first stored in the frame memory 201, and then outputted from the frame memory 201 on a block-by-block basis (e.g. in a unit of macro block having horizontal 16 pixels and vertical 16 pixels).

The macro block outputted from the frame memory 201 is inputted to the intra prediction mode determination unit 210 (the switch 614 is connected to "a" by the control unit 216). In this case, the operations of the intra prediction determination unit 210 and inter prediction unit 212 are similar to the operations described in the first embodiment. The information indicating the intra prediction mode is outputted to the inter prediction unit 212 and the coding mode determinination unit 618. Therefore, the explanation about the operations is omitted in here.

The macro block outputted from the frame memory 201 is inputted to the motion estimation unit 611 (the switch 614 is connected to "b" by the control unit 216). The motion estimation unit 611 estimates, for the inputted macro block, the motion (motion vector) to the reference picture (a coded picture that is held in the reference picture memory 209 and is different from the picture to be coded). In the motion estimation, generally the following motion vector is selected: the motion vector having a minimum differential value between the block to be coded and a predictive image (an image in the reference picture referred by the motion vector) and a minimum sum of weights for coding amount of the motion vector. The estimated motion vector is outputted to the motion compensation unit 613 and the coding mode determination unit 205.

The motion compensation unit 613 generates a predictive image MP by obtaining inter reference pixels from the reference picture memory 209 based on the motion vector determined by the motion estimation unit 611, and outputs the predictive image MP to the subtracting unit 202 (the switch 615 is connected to "b" by the control unit 216).

The processing performed by the subtracting unit 202, the frequency transform unit 203, the quantization unit 204, the inverse quantization unit 206, the inverse frequency transform unit 207 and the adding unit 208 is same as the processing described in the first embodiment. Therefore, the explanation about the processing is omitted here.

The coding mode determination unit 618 determines a coding mode of a macro block to be coded using outputs from the intra prediction mode determination unit 210, motion estimation unit 611, quantization unit 204, frame memory 201, and adding unit 208, and the like. Here, it is determined which one of the intra-picture prediction coding and the inter-picture prediction coding is used for coding the macro block to be coded. For determining the coding mode, in general, a coding mode having a small value of the sum of weights between the amount of bits to be generated and the coded distortion. In the case where the intra-picture prediction coding is selected as the coding mode, the information indicating the intra prediction mode IPM is outputted to the variable length coding unit 205, while the motion vector MV and the coding mode MD are outputted to the variable length coding unit 205 in the case where the inter-picture prediction coding is selected as a coding mode.

The variable length coding unit 205 performs variable length coding on a quantized frequency transform coefficients QT inputted from the quantization unit 204 and on the coding mode MD and the intra prediction mode IPM or the motion vector MV outputted from the coding mode determination unit 618, and outputs a bit stream ST_R.

Here, in the case where the variable length coding unit 205 codes the motion vector MV using a context adaptive arithmetic coding method , a method of changing a probabitity table depending on a size (context) of the motion vector of the coded peripheral block can be used. Here, it is assumed that the probability tables have been held in the probability table holding unit 217.

The bit streams ST_R, ST_G and ST_B respectively outputted from the coding units 102a, 103a and 104a are inputted to the bit stream multiplexing unit 105. The bit stream multiplexing unit 105 multiplexes three bit streams ST_R, ST_G and ST_B into one bit stream ST, and outputs the bit stream ST. Here, as a method of multiplexing three bit streams into one bit stream, there are a method of multiplexing in a unit of block or macro block, and a method of multiplexing in a unit of picture or slice. In the case where the bit streams are multiplexed in a unit of block or macro block, there is an effect that the multiplexed bit stream has a same structure as the bit stream obtained by coding the conventional YUV pictures. FIG. 5D shows an example of a structure of the bit stream for this case (in this case, the coding mode of the macro block is the inter-picture prediction coding). Also, in the case of multiplexing in a unit of picture or slice, a unit for multiplexing becomes larger so that switching process of bit streams for multiplexing is reduced. Thus, there is an effect that the multiplexing process can be simplified. The bit stream structure herein is same as the structure shown in FIG. 5B. Further, information (flag) indicating that each signal of RGB is independently coded (indicating that a motion vector is determined independently or indicating that the motion vector for each signal is respectively described in the bit stream) may be described in the bit stream. The information (flag) may be described in a header of a whole sequence or an additional information unit. FIG. 5C shows an example of a bit stream structure for this case. Accordingly, when the decoding apparatus decodes the bit stream, it can easily judge whether it can decode each of the RGB signals independently.

As described in the above, the moving picture coding apparatus of the present invention receives a moving picture of RGB 4 : 4 : 4 format as an input picture, separates R signal, G signal and B signal from the input signal, and perform intra prediction coding of each signal using respective coding unit for each signal. Herein, the motion vector used for motion prediction for coding each signal is determined independently for each signal. Further, in the case where arithmetic coding is used for variable length coding for coding each signal (e.g. when the motion vector is coded), a probability table is held respectively by each signal (a probability table is not commonly used among signals).

Through such operations, coding can be performed completely independently for each signal (coding units do not need to transfer data, information and the like mutually each other). Therefore, in the case where single coding apparatus cannot perform coding because the number of pixels to be processed is very large as in the moving picture having the degree of resolution equal to or more than the HDTV, the coding process can be realized in real time by coding each signal in parallel. Also, the structure of the coding apparatus and the processing details herein can be simplified. Also, in this case, each of the RGB signal has the same number of pixels so that the respective coding unit of each signal can have the same hardware structure. Furthermore, in the case where the motion vector is determined respectively for each signal, information indicating the motion vector is respectively described in each signal as a bit stream structure. Accordingly, the RGB signals can be decoded respectively also in the case of decoding the bit stream so that there is an effect that the decoding process is simplified.

### (Second Variation)

The first embodiment and the first variation of the first embodiment can be modified as follows.

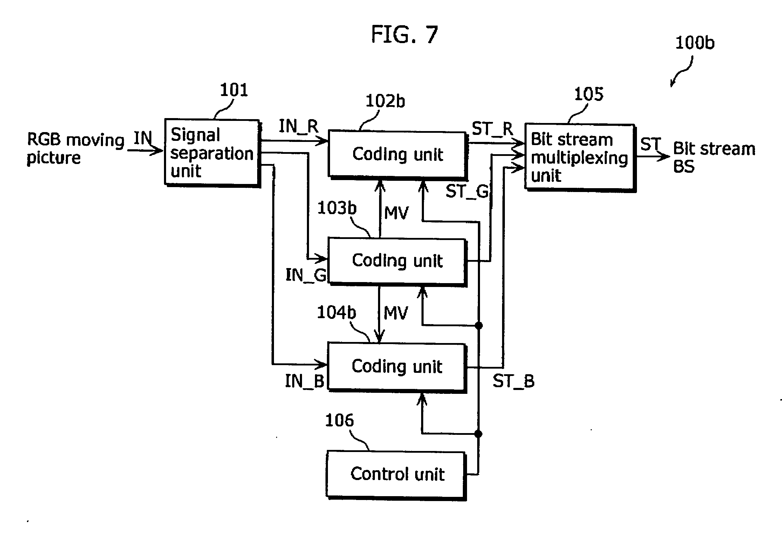

FIG. 7 is a block diagram showing an example of a variation of the moving picture coding apparatus of the present invention. While the moving picture coding apparatus 100b has almost similar structure as the moving picture coding apparatus 100 described in the first embodiment, it differs from the moving picture coding apparatus 100 in that it performs information passing among the coding units 102b, 103b, and 104b. Further, structures are slightly different among the coding unit 103b which processes G signal and the coding units 102b and 104b which process other signals (R signal and B signal).

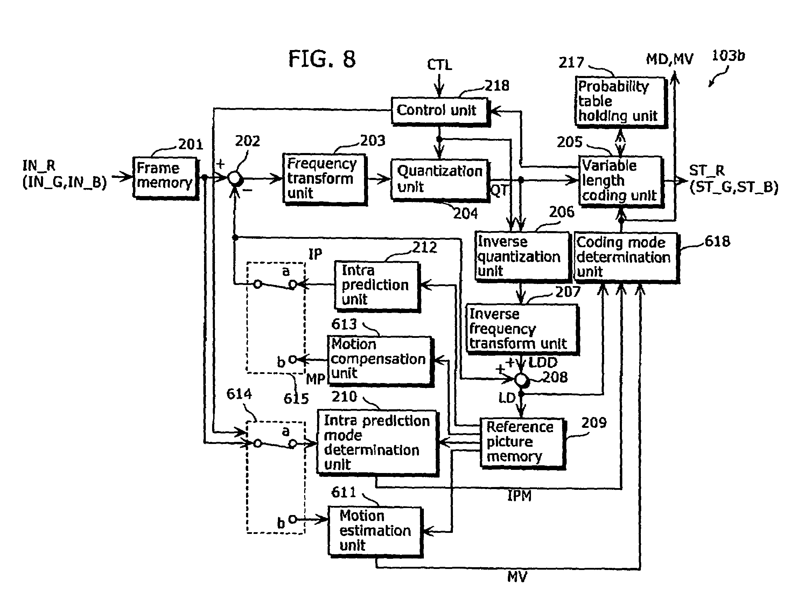

FIG. 8 is a block diagram showing an example of a structure of the coding unit 103b which codes the G signal. The coding unit 103b has the same structure as the coding unit 102a shown in FIG. 6 according to the first embodiment. However, it differs in that it outputs the coding mode MD and motion vector MV (only in the case of inter-picture prediction mode) that are determined by the coding mode determination unit 618 to the coding units 102b and 104b.

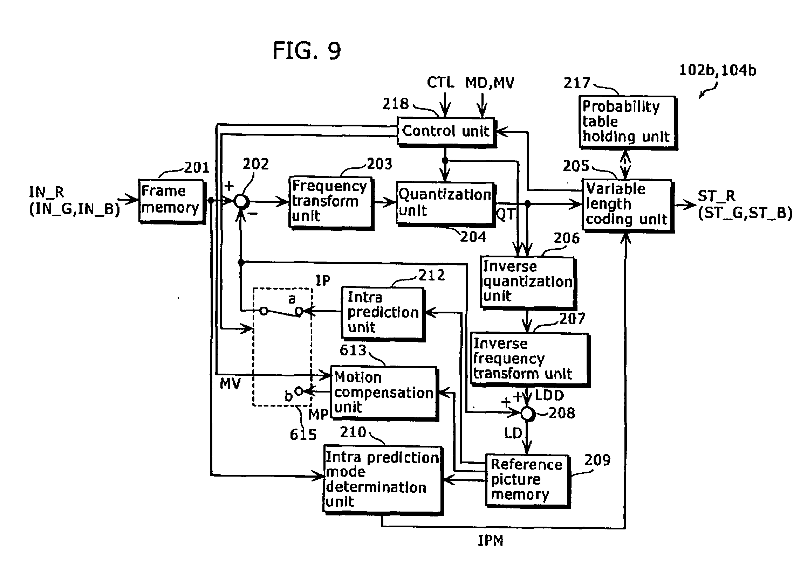

FIG. 9 is a diagram showing an example of a structure of the coding unit 102b (or 104b) which codes the R signal (or B signal). The coding unit 102b has the same structure as the coding unit 102a shown in FIG. 6 according to the first embodiment. However, the following two points are different. First, it does not have the motion estimation unit 611. Second, it performs coding using the coding mode MD and motion vector MV (only in the case of inter-picture prediction coding mode) that are inputted from the coding unit 103b to the control unit 216. The details are described in the following.

In the case where the coding mode MD is the intra-picture prediction coding mode, the intra prediction mode is determined by the intra prediction mode determination unit 210, and the inter predictive image is generated by the inter prediction unit 212 (the switch 615 is connected to "a"). The method of coding the differential image between the input picture and the predictive image is same as the method described in the first embodiment. The intra prediction mode IPM is outputted to the variable length coding unit 205 and described in the bit stream.

In the case where the coding mode MD is the inter-picture prediction coding mode, the motion vector MV is outputted to the compensation unit 613. Also, the switch 615 is connected to "b". The motion compensation unit 613, based on the inputted motion vector, obtains inter-picture reference pixels from the reference picture memory 209, generates a predictive image MP, and outputs the predictive image MP to the subtracting unit 202 via the switch 615. The method of coding the differential image between the input picture and the predictive image is same as the method described in the first embodiment. However, the coding mode MD and the motion vector MV are not described in the bit stream (the coding mode MD and the motion vector MV are described in the bit stream ST_G outputted by the coding unit 103b).

The bit streams ST_R, ST_G and ST_B outputted from the coding units 102b, 103b and 104b are inputted to the bit stream multiplexing unit 105. The bit stream multiplexing unit 105 multiplexes the inputted three bit streams ST_R, ST_G and ST_B into one bit stream and outputs the bit stream. Here, as a method of multiplexing the three bit streams into one bit stream, there is a method of multiplexing in a unit of block or macro block, a method of multiplexing in a unit of picture or slice. In the case where the bit streams are multiplexed in a unit of block or macro block, there is an effect that the multiplexed bit stream has a same bit stream structure as the bit stream obtained by coding the conventional YUV pictures. FIG. 5E shows an example of a bit stream structure for this case. In this case, the order within the bit stream is changed so that the coding mode MD and the motion vector MV described in the bit stream ST_G are described in a head of a block or a macro block. Also, in the case of multiplexing in a unit of picture or slice, a unit for multiplexing becomes larger so that switching process of bit streams for multiplexing is reduced. Thus, there is an effect that the multiplexing process can be simplified. The bit stream structure herein is same as the structure shown in FIG. 5B. Further, information (flag) indicating the followings may be described in the bit stream: the intra prediction is determined independently for each of the RGB signals (an intra prediction mode for each signal is independently described in the bit stream); and the motion vector is commonly used by the RGB signals (the common motion vector for the RGB signals is described in the bit stream). The information (flag) may be described in a header of the whole sequence or in the additional information unit. FIG. 5C shows an example of a bit stream structure for this case. Accordingly, when the decoding apparatus decodes the bit stream, it can be easily judged that the intra prediction is independently described for each signal and the motion vector is commonly used by the signals and described.

As described in the above, the moving picture decoding apparatus of the present invention receives a moving picture of RGB 4 : 4 : 4 format as an input picture, separates the input signal into an R signal, a G signal and a B signal, and codes each signal using the intra-picture prediction coding and the inter-picture prediction coding. Herein, the coding mode (which one of the intra-picture prediction coding and the inter-picture prediction coding is used) determined by the first signal (e.g. G signal) is also used for coding the second signal (e.g. R signal and B signal). In the case where the coding mode is the intra-picture prediction coding, the intra picture prediction method is determined independently for each signal. Further, in the case where the inter-picture prediction coding, the motion vector determined for the first signal (G signal) is used. Then, the coding mode and the motion vector for a unit of one coding (e.g. macro block) determined for the first signal are only described in the bit stream. Also, the intra prediction mode determined for each signal is described in the bit stream.

Through such operation, in the intra-picture prediction coded macro block in the intra-picture prediction coded picture or in the inter-picture prediction coded picture, coding is performed completely independently for each signal, while in the inter-picture prediction coded macro block, the motion vector determined for the first signal is commonly used. In general, in the intra-picture prediction coded macro block, the amount of coding of the quantization frequency transform coefficients is dominant over the total amount of generation coding, and the amount of information of the intra prediction mode is small. Then, the amount of processing for determining the intra prediction mode is relatively small. Further, in the inter-picture prediction coded macro block, the amount of coding the motion vector is large in the total amount of generation coding. Then, in the inter-picture prediction coding, the amount of processing for the motion estimation is dominant in the total amount of processing. Therefore, in the processing of intra-picture coded picture, the structure (processing) of the coding apparatus can be simplified without reducing the coding efficiency. At the same time, in the processing of inter-picture prediction coded picture, while the structure (processing) of the coding apparatus is slightly complicated (because communication among coding units of respective signals is necessary), the amount of processing for the coding units as a whole can be largely reduced (the processing of motion estimation is performed only on one signal), and the coding efficiency can be increased (because the number of motion vectors described in the bit stream is reduced).

It should be noted that, in the second variation, the coding mode and motion vector obtained in the coding process of G signal are used for coding other signals (R signal and B signal). However, the coding mode and the motion vector can be determined using the R signal and B signal, and the similar effect as in the present invention can be obtained for this case.

### (Second Embodiment)

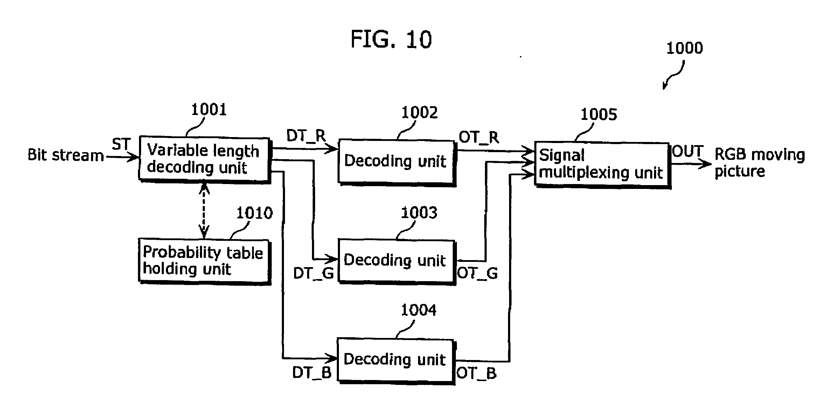

FIG. 10 is a block diagram showing an example of a structure of a moving picture decoding apparatus according to the present invention. The moving picture decoding apparatus 1000 is made up of a variable length decoding unit 1001, three decoding units 1002, 1003 and 1004, a signal multiplexing unit 1005 and a probability table holding unit 1010.

A bit stream ST is inputted to the variable length decoding unit 1001. The bit stream ST is obtained by coding a moving picture signal of RGB 4 : 4 : 4 format, and is the bit stream generated by the moving picture coding apparatus described in the first embodiment.

The bit stream ST inputted to the variable length decoding unit 1001 is variable-length decoded. The examples of the bit stream herein are shown in FIG. 5A and FIG. 5B. As shown in FIG. 5A, in the case of multiplexing bit streams into one bit stream in a unit of block or macro block, there is an effect that the bit stream has a structure that is almost same as that of the bit stream obtained by coding the conventional YUV pictures. Further, as shown in FIG. 5B, in the case of multiplexing bit streams into a bit stream in a unit of picture or slice, the unit of inverse multiplexing becomes greater so that there is an effect that the inverse multiplexing can be simplified. Further, as the bit stream structure shown in FIG. 5C, in the case where information indicating that each signal of RGB is independently coded is described in the bit stream, the decoding apparatus can judge easily about whether or not the decoding apparatus can decode the RGB signals independently by checking the information when the decoding apparatus decodes the bit stream.

As an example of the variable length decoding method used by the variable length decoding unit 1001, there is a context adaptive arithmetic decoding method. The context adaptive arithmetic decoding method is a method of switching probability tables used for arithmetic decoding according to data to be variable length decoded and data that has been variable length decoded (context adaptation). For example, as a context for variable-length decoding the quantized frequency transform coefficients QT, block size for intra prediction, block size for frequency transformation and the like are used. Here, it is assumed that the probability tables are held in the probability table holding unit 1010. Also, the probability tables are different for each of R signal, G signal and B signal.

Among the quantized frequency transform coefficients obtained by performing variable length decoding on the bit stream ST and the data for intra prediction mode and the like, the data of signal DT_R, the data of signal DT_G and the data of signal DT_B are respectively inputted to the decoding units 1002, 1003 and 1004.

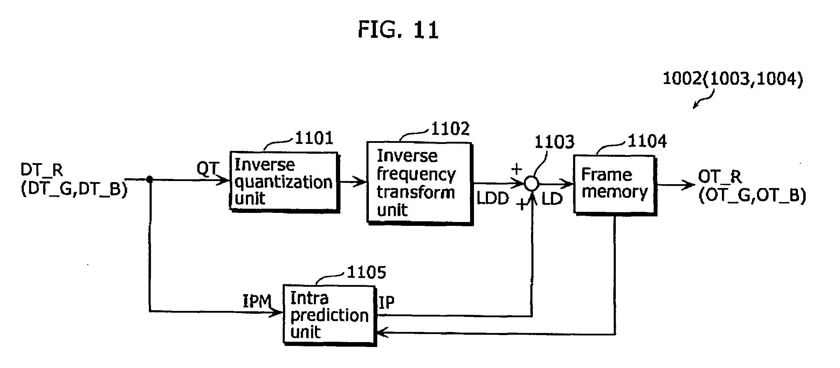

FIG. 11 shows a structure of each of the decoding units 1002, 1003 and 1004. Hereafter, the operation of the decoding unit 1002 which decodes the data of R signal DT_R is explained. However, the structure and the operation are same for the decoding unit 1003 which decodes the data of G signal DT_G and for the decoding unit 1004 which decodes the data of B signal DT_B.

As shown in FIG. 11, the decoding unit 1002 is made up of an inverse quantization unit 1101, an inverse frequency transform unit 1102, an adding unit 1103, a frame memory 1104 and an inter prediction unit 1105.

The decoding unit 1102 decodes each picture of the data of R signal DT_R as an intra-picture prediction coded picture.

Among the data DT_R, the information indicating the intra prediction mode is inputted to the intra prediction unit 1105 and the quantized frequency transform coefficients QT are inputted to the inverse quantization unit 1101.

The intra prediction unit 1105, based on the inputted intra prediction mode, obtains intra reference pixels from the frame memory 1104, generates an intra predictive image, and outputs the intra predictive image to the adding unit 1103.

The quantized frequency transform coefficients QT are inverse quantized by the inverse quantization unit 1101, are further inverse frequency transformed by the inverse frequency transform unit 1102, and become a decoded differential image LDD. The decoded differential image LDD is added to the intra predictive image IP by the adding unit 1103 so as to obtain the decoded image LD, and stored in the frame memory 1104. The decoded image stored in the frame memory 1104 is used as a reference picture in a later decoding. Also, it is outputted as an output picture OT_R at an appropriate timing.

The output picture of R signal outputted from the decoding unit 1002 OT_R, the output picture of G signal outputted from the decoding unit 1003 OT_G, and the output picture of B signal outputted from the decoding unit 1004 are inputted to the signal multiplexing unit 1005, and outputted as an RGB color picture signal OUT.

As described in the above, the moving picture decoding apparatus according to the present invention receives the bit stream obtained by coding the moving picture of RGB 4 : 4 : 4 format as an input, separates the input bit stream into data of R signal, data of G signal and data of B signal after performing variable length decoding of the input bit stream, and performs intra predictive decoding respectively on the data of each signal using a respective decoding unit. Herein, in the intra prediction for decoding each signal, the intra prediction is performed using information of the intra prediction mode determined respectively for each signal. Further, in the variable length decoding using arithmetic decoding, the probability tables are held for respective signals.

Through such operation, the decoding processing after variable length decoding can be performed completely independently for each signal (because it is unnecessary to mutually transfer data and information among decoding units) and the structure of the decoding apparatus can be simplified without reducing the coding efficiency. In this case, each of the RGB signals has an equal number of pixels so that the decoding unit of each signal can have a same hardware structure.

It should be noted that, while the present embodiment describes the case where the picture of RGB 4 : 4 : 4 format, that is, a bit stream into which a picture having three color elements is coded is handled, the decoding process can be realized in the same structure even in the case where the number of elements is other than three colors (e.g. four colors, six colors and the like). Furthermore, the same effect obtained in the present embodiment can be obtained.

### (First Variation)

The second embodiment can be modified as follows.

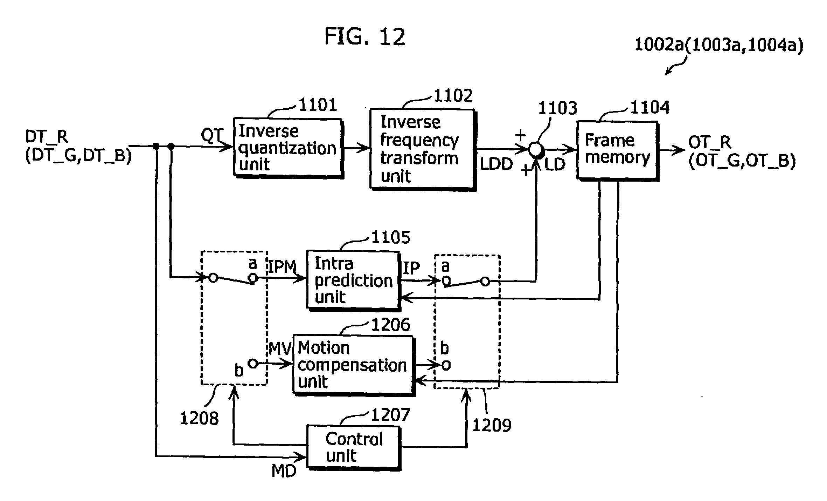

FIG. 12 is a diagram showing an example of a different structure of the decoding unit 1002 (the decoding unit 1003 or 1004) (for the purpose of distinction, they are called decoding units 1002a, 1003a and 1004a). The decoding unit 1002a includes, in addition to the structure of the decoding unit 1002 shown in FIG. 11, a motion compensation unit 1206, a control unit 1207, and switches 1208 and 1209.

Whereas the decoding unit 1002 decodes each picture of the data of R signal DT_R into an intra-picture predictive coded picture, the decoding unit 1002a differs from the decoding unit 1002 in that it can decode the picture of the data of R signal DT_R into an intra-picture prediction coded picture.

The method for the coding unit 102a to decode a picture into an intra-picture prediction coded picture is same as the method described in the second embodiment. Therefore, the explanation about the same method is omitted in here (the processing is performed by connecting the switches 1208 and 1209 to "a").

It is explained about an operation in the case where the picture of the data DT_R is decoded into an inter-picture prediction coded picture. Note that, herein in the case where the context adaptive arithmetic decoding method is used in the variable length decoding unit 1001, different probability tables are used for R signal, G signal and B signal.

Among the data DT_R, the coding mode MD is inputted to the control unit 1207, the information indicating the intra prediction mode IPM or the motion vector MV is inputted to the switch 1208, and the quantized frequency transform coefficients QT are inputted to the inverse quantization unit 1101.

The control unit 1207 controls the switch 1208 based on the coding mode MD. In the case where the coding mode MD indicates the intra prediction coding, the switch 1208 is connected to "a", and the information indicating the intra prediction mode IPM is inputted to the intra prediction unit 1105. In the case where the coding mode MD indicates the inter-picture prediction coding, the switch 1208 is connected to "b", the motion vector MV is inputted to the motion compensation unit 1206. The processing in the case where the coding mode MD indicates the intra prediction coding is same as the processing explained in the second embodiment. Therefore, the explanation about the same processing is omitted in here. Hereafter, it is explained about the case where the coding mode MD indicates the inter-picture prediction coding.

The motion compensation unit 1206, based on the inputted motion vector MV, obtains reference pixels from the frame memory 1104, generates a predictive picture, and outputs the predictive picture to the adding unit 1103.

The processing of the inverse quantization unit 1101, inverse frequency transform unit 1102 and adding unit 1103 are same as the processing explained in the second embodiment, and the decoded images LDs are generated through the processing. The decoded images LDs are stored in the frame memory 1104. The decoded images stored in the frame memory 1104 are used as reference pictures for the later decoding. Also, the decoded images are outputted as output pictures OT_R at an appropriate timing.

The output picture of R signal outputted from the decoding unit 1002 OT_R, the output picture of G signal outputted from the decoding unit 1003, and the output picture of B signal outputted from the decoding unit 1004 OT_B are inputted to the signal multiplexing unit 1005, multiplexed and outputted as an RGB color picture signal OUT.

As described in the above, the moving picture decoding apparatus according to the present invention receives a bit stream obtained by coding the moving picture of RGB 4 : 4 : 4 format as an input, separates the input bit stream into data of R signal, data of G signal and data of B signal after performing variable length decoding of the input bit stream, and decodes data of each signal independently using a decoding unit that is different for each signal. Herein, in the intra prediction for decoding each signal, the intra prediction is executed using information of the intra prediction mode determined independently for each signal. Also, in the inter-picture prediction for decoding each signal, the inter-picture prediction (motion compensation) is executed using information of the motion vector determined independently for each signal. Further, in the variable length decoding using arithmetic decoding, each signal respectively holds a probability table.

Through such operation, decoding processing after the variable length decoding can be performed independently for each signal (because it is unnecessary to mutually transfer data and information among decoding units). Therefore, as a moving picture having a degree of resolution that is equal to or greater than the HDTV, in the case where single decoding apparatus cannot decode a picture because there are too many number of pixels to be processed, each signal can be decoded in parallel. In this case, the RGB signals have the same number of pixels so that a decoding unit of each signal can have a same hardware structure. Therefore, even in the case where there are too many number of pixels to be processed, the structure of the decoding apparatus as a whole and the processing details can be simplified.

### (Second Variation)

The second variation of the second embodiment is described.

A bit stream ST is inputted to the variable length decoding unit 1001. The bit stream ST is obtained by coding the moving picture signal of RGB 4 : 4 : 4 format, and generated by the moving picture coding apparatus described in the second variation of the first embodiment.

The bit stream ST inputted to the variable length decoding unit 1001 is processed variable length decoding. FIG. 5E shows an example of a bit stream structure for this case. The second variation differs from the first variation in that, in the macro block that is inter-picture prediction coded, the motion vector information is described commonly for the R signal, the G signal and the B signal. The variable length decoding unit 1001 copies the motion vector information obtained by performing variable length decoding on the bit stream ST to the data of R signal DT_R, the data of G signal DT_G and the data of B signal DT_B, and outputs to the decoding units 1002a, 1003a and 1004a. Note that herein in the case where the variable length decoding unit 1001 uses the context adaptive arithmetic decoding method, the probability table for the motion vector is used commonly for the R signal, the G signal and the B signal (common among blocks and macro blocks).

The later processing is same as the processing described in the first variation. Therefore, the explanation about the same processing is omitted in here.

As described in the above, the moving picture decoding apparatus according to the present invention receives the bit stream obtained by coding the moving picture of the RGB 4 : 4 : 4 format as an input, separates the input bit stream into the data of R signal, the data of G signal and the data of B signal after variable length decoding, and decodes data of each signal independently using a different decoding unit. Herein, in the intra-picture prediction for decoding each signal, the intra prediction is performed using information of the intra prediction mode determined independently for each signal. Further, in the inter-picture prediction for decoding each signal, the inter-picture prediction (motion compensation) is performed using information of the motion vector that is common to all signals. Further more, in the variable length decoding using the arithmetic decoding, the data other than the motion vector hold probability table respectively for the signals.

Through such operation, in the intra-picture prediction coded macro block in the intra-picture prediction coded picture or in the inter-picture prediction coded picture, decoding is performed completely independently for each signal, while in the inter-picture prediction coded macro block, the motion vector common to all signals is used. In general, in the intra-picture prediction coded macro block, the amount of coding of the quantized frequency transform coefficients is dominant over the total amount of generation coding, and the amount of information of the intra prediction mode is small. Further, in the inter-picture prediction coded macro block, the amount of coding the motion vector is large in the total amount of generation coding. Therefore, in the processing of intra-picture coded picture, the structure (processing) of the decoding apparatus can be simplified without reducing the coding efficiency, and in the processing of inter-picture prediction coded picture, even if the structure (processing) of the decoding apparatus becomes slightly complicated, the coding efficiency can be increased (because the number of motion vectors described in the bit stream is reduced). Therefore, as a moving picture having a degree of resolution that is equal to or greater than the HDTV, in the case where single decoding apparatus cannot decode a picture because there are too many number of pixels to be processed, each signal can be decoded in parallel. In this case, the RGB signals have the same number of pixels so that a decoding unit of each signal can have a same hardware structure.

Although only some exemplary embodiments of this invention have been described in detail above, those skilled in the art will readily appreciate that many modifications are possible in the exemplary embodiments without materially departing from the novel teachings and advantages of this invention. Accordingly, all such modifications are intended to be included within the scope of this invention.

### Industrial Applicability

A moving picture coding apparatus, moving picture decoding apparatus and bit stream according to the present invention have an effect that coding processing and decoding processing can be performed independently for each signal so that the structures of the coding apparatus and decoding apparatus can be simplified. They are useful as the moving picture coding apparatus, moving picture decoding apparatus and bit stream for storing, transmitting, communicating and the like.

## Claims

1. A moving picture coding apparatus comprising:
a signal separation unit operable to separate an input picture made up of N component pictures, where N is an integer that is 2 or greater, into the N component pictures, each of the N component pictures having an equal number of pixels as the input picture;
N coding units, each of which is operable to code one of the N component pictures into an intra-picture prediction coded picture or an inter-picture prediction coded picture, and to output a code sequence corresponding to the component picture; and
a bit stream multiplexing unit operable to multiplex the N code sequences outputted from said N coding units into one bit stream, and to output the bit stream.

2. The moving picture coding apparatus according to Claim 1,
wherein an intra prediction mode is determined independently for each of said N coding units.

3. The moving picture coding apparatus according to Claim 1,
wherein a motion vector is detected independently for each of said N coding units.

4. The moving picture coding apparatus according to Claim 1,
wherein an intra prediction mode is determined independently for each of said N coding units, and a common motion vector is used by said N coding units.

5. The moving picture coding apparatus according to Claim 4,
wherein the motion vector is detected by one of said N coding units.

6. The moving picture coding apparatus according to Claim 1,
wherein each of said N coding units uses a respective probability table for performing variable-length coding of information indicating an intra prediction mode using arithmetic coding.

7. The moving picture coding apparatus according to Claim 1,
wherein each of said N coding units uses a respective probability table for performing variable-length coding of a motion vector using arithmetic coding.

8. The moving picture coding apparatus according to Claim 1,
wherein each of said N coding units uses a respective probability table for performing variable-length coding of information indicating an intra prediction mode using arithmetic coding, and uses a probability table common to said N coding units for performing variable-length coding of a motion vector using arithmetic coding.

9. A moving picture decoding apparatus, comprising:
a variable length decoding unit operable to perform variable-length decoding of an input bit stream generated by coding an original picture made up of N component pictures, where N is an integer that is 2 or greater, and to separate the bit stream into N code sequences corresponding to the N component pictures, each of the N component pictures having an equal number of pixels as the original picture;
N decoding units, each of which is operable to decode one of the N code sequences into an intra-picture prediction coded picture, and to output a decoded picture corresponding to one of the N component pictures; and
a signal multiplexing unit operable to multiplex the N decoded pictures outputted by said N decoding units into a decoded picture, and to output the decoded picture.

10. The moving picture decoding apparatus according to Claim 9,
wherein each of said N decoding units is operable to perform intra prediction using an intra prediction mode determined independently for each of said N decoding units.

11. The moving picture decoding apparatus according to Claim 9,
wherein each of said N decoding units is operable to perform motion compensation using a motion vector detected independently for each of said N decoding unit.

12. The moving picture decoding apparatus according to Claim 9,
wherein each of said N decoding units is operable to perform intra prediction using an intra prediction mode determined independently for each of said N decoding units, and to perform motion compensation using a common motion vector used by said N decoding units.

13. The moving picture decoding apparatus according to Claim 9,
wherein said variable length decoding unit uses a probability table determined independently for each of the N component pictures, for performing variable-length decoding of information indicating an intra prediction mode using arithmetic decoding.

14. The moving picture decoding apparatus according to Claim 9,
wherein said variable length decoding unit uses a probability table determined independently for each of the N component pictures, for performing variable-length decoding of a motion vector using arithmetic decoding.

15. The moving picture decoding apparatus according to Claim 9,
wherein said variable length decoding unit uses a probability table determined independently for each of the N component pictures for performing variable-length decoding of information indicating an intra prediction mode using arithmetic decoding, and uses a probability table common to the N component pictures for performing variable-length decoding of a motion vector using arithmetic decoding.

16. A code sequence having a data structure as a bit stream to be decoded by a computer,
wherein the code sequence represents one bit stream made up of N code sequences, where N is an integer that is 2 or greater,
the N code sequences respectively correspond to N component pictures separated from an original picture,
each of the N component pictures has an equal number of pixels as the original picture, and
each of the N code sequences is coded by one of an intra-picture prediction coding and an inter-picture prediction coding.

17. The code sequence according to Claim 16,
wherein said bit stream further includes a respective intra prediction mode for each of the N component pictures.

18. The code sequence according to Claim 16,
wherein said bit stream further includes Information indicating that a respective intra prediction mode for each of the N component pictures is included.

19. The code sequence according to Claim 16,
wherein said bit stream further includes a respective motion vector for each of the N component pictures is included.

20. The code sequence according to Claim 16,
wherein said bit stream further includes information indicating that a respective motion vector for each of the N component pictures is included.

21. The code sequence according to Claim 16,
wherein said bit stream further includes a respective intra prediction mode for each of the N component pictures and a motion vector common to the N component pictures.

22. The code sequence according to Claim 16,
wherein said picture bit stream further includes information indicating that a respective intra prediction mode for each of the N component pictures and a motion vector common to the N component pictures are included.
